(19) Europäisches Patentamt
European Patent Office
Office européen des brevets

(11) **EP 1 607 714 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(51) Int Cl.:
***G01B 5/14*** *(2006.01)*     ***G01B 21/16*** *(2006.01)*

(21) Anmeldenummer: **05010721.8**

(22) Anmeldetag: **18.05.2005**

(54) **Verfahren und Messanordnung zur Spielmessung an einem Achsgelenk**

Method and device for measuring the play of a pivotable link

Procédé et dispositif pour mesurer le jeu d'un joint pivotable

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **15.06.2004 DE 102004028558**

(43) Veröffentlichungstag der Anmeldung:
**21.12.2005 Patentblatt 2005/51**

(73) Patentinhaber: **ABB PATENT GmbH**
**68526 Ladenburg (DE)**

(72) Erfinder:
• **Bader, Axel, Dipl.-Ing. (FH)**
**61169 Friedberg (DE)**

• **Hansen, Sven**
**61200 Berstadt (DE)**
• **Schmidt, Steffen**
**73434 Aalen (DE)**
• **Henrich, Kim, Dipl.-Ing. (FH)**
**63683 Gelnhaar (DE)**

(74) Vertreter: **Miller, Toivo**
**ABB Patent GmbH**
**Postfach 1140**
**68520 Ladenburg (DE)**

(56) Entgegenhaltungen:
**WO-A-03/010490     DE-A- 19 943 481**
**FR-A- 2 266 045**

EP 1 607 714 B1

**Beschreibung**

Die Erfindung betrifft ein Verfahren zur Spielmessung an einem Achsgelenk eines Industrieroboters. Zudem betrifft die Erfindung eine Messanordnung für eine Spielmessung an einem Achsgelenk.

Es ist allgemein bekannt, dass die Messung des mechanischen Spiels einer Lagerachse oder einer Getriebewelle eines Industrieroboters mit einer Messuhr gemessen wird. Hierzu werden von den Personen, die die Messung durchführen, die Roboterachsschenkel durch Gewichte in gewünschter Weise belastet. Die durch die Gewichte veränderte Lage der Roboterachsschenkel werden an bestimmten Stellen mit einer Messuhr längenmäßig erfasst und durch Vergleich mit den zulässigen Spielwerten der Verschleißzustand der betreffende Lagerachse oder der Getriebewelle festgestellt.

Nachteilig dabei ist es, dass das vorstehend genannte Vorgehen vergleichsweise zeitaufwändig ist und eine Einzelmessung vergleichsweise ungenau ist. Die Erhöhung der Genauigkeit der Messung durch häufige Wiederholungen ist jedoch entsprechend zeitraubend.

Die DE-A-199 43 481 beschreibt eine Anordnung mit einer rotierenden Exzenterscheibe und einem Wegsensor zur Bestimmung eines Spiels in einem Lager oder einer Befestigung. Die Anordnung wird dabei auf das zu untersuchende Objekt aufgesetzt, die Exzenterscheibe in Rotation versetzt und die daraus folgende Schwingung des Objekts mit dem Wegsensor erfasst und einer Auswertung zugeführt. Die WO-A-03 010 490 beschreibt eine Vorrichtung zum Messen des Spiels der Steuerfläche eines Flugzeugflügels. Dabei wird die Steuerfläche durch die flügeleigene Hydraulik um einen vorgegebenen Sollbetrag zu einem vorgegebenen Zeitpunkt ausgelenkt. Ein auf dem fixen Flügel montierter Abstandssensor zeichnet die daraus folgende Bewegung der Steuerfläche auf. Aus der zeitlichen und örtlichen Abweichung der Ist-Bewegung von der Soll-Bewegung wird das Spiel berechnet.

Ausgehend von diesem Stand der Technik ist es Aufgabe der Erfindung, ein Verfahren und eine Messanordnung zur Spielmessung an einem Achsgelenk eines Industrieroboters anzugeben, bei dem die Messung möglichst schnell und genau erfolgt.

Diese Aufgabe wird gelöst durch ein Verfahren zur Spielmessung an einem Achsgelenk eines Industrieroboters mit den in Anspruch 1 genannten Merkmalen sowie mit einer Messanordnung zur Spielmessung an einem Achsgelenk eines Industrieroboters mit den in Anspruch 12 angegebenen Merkmalen.

Das Verfahren zur Spielmessung an einem Achsgelenk eines Industrieroboters, bei dem ein erster und ein zweiter Roboterachsschenkel durch das Achsgelenk in einer Drehrichtung beweglich miteinander verbunden sind, ist dadurch gekennzeichnet, dass eine Lastgebevorrichtung den ersten mit dem freien Ende eines Roboterarmes verbundenen Roboterachsschenkels in einer Messlinie wechselseitig einmal in einer Richtung und einmal in entgegengesetzter Richtung mit einer vorgebbaren Kraft beaufschlagt, dass die vorgegebene Kraft für einen bestimmten Zeitraum aufrecht erhalten wird, bevor eine Entlastung des Roboterachsschenkels erfolgt, dass ein Wegsensor die Auslenkung des ersten Roboterachsschenkels in einem vorgebbaren Abstand zur Drehachse des Achsgelenks misst, und dass ein mit dem Wegsensor verbundenes Auswertegerät unter Berücksichtigung der geometrischen Anordnung bei der Messung des Wegsensors und des Industrieroboters sowie der gemessenen Auslenkung einen Verdrehwinkel des ersten Roboterachsschenkels als Maß eines vorhandenen Spieles am Achsgelenk berechnet.

Vorteilhaft dabei ist es, dass nunmehr ein Wegsensor automatisch die Auslenkung des ersten Roboterachsschenkels misst, und somit die seither übliche Ablesung von Messwerten durch Bedienpersonal und die damit verbundenen Fehlerquellen, wie zum Beispiel ein parallaxer Fehler, ausgeschlossen sind. Auf diese Weise ist die Genauigkeit der Messung erhöht. Zudem ist es auch vorteilhaft, dass die Lastgebvorrichtung zur weiteren Erhöhung der Genauigkeit mehrere oder viele Lastzyklen vorgibt und somit eine wiederholte Messung der Auslenkung möglich ist. Auch durch diese Maßnahme wird die Genauigkeit der Messung weiter erhöht. Außerdem ist durch den automatisierten Ablauf der Messung und deren Auswertung die Geschwindigkeit der Messung sowie deren Auswertung in vorteilhafter Weise erhöht.

Beim Erfindungsgegenstand soll mit einer Lastgebevorrichtung jede Vorrichtung verstanden sein, die einem Roboterachsschenkel in der vorstehend näher beschriebenen Weise mit Kraft beaufschlagt. Je nach Automatisierungsgrad der Lastgebevorrichtung ist dabei zum Beispiel auch ein Kraftmesser vorgesehen, der die aufzubringende Kraft ständig misst und so den betreffenden Roboterarm bis zu einem Maximalwert, der vorgebbar ist, belastet. Die Kraft kann aber auch in der Lastgebevorrichtung selbst voreingestellt sein, so dass keine weiteren Messungen notwendig sind.

Ein weiterer Vorteil des erfindungsgemäßen Verfahrens besteht darin, dass lediglich eine Messgröße, nämlich eine Länge, durch die Messung aufgenommen wird. Für die Auswertung der Messung beziehungsweise die Interpretation der Messwerte sind lediglich noch die geometrischen Anordnungsdaten von Wegsensor und Industrieroboter beziehungsweise Achsschenkeln bei der Messung notwendig. Hierbei werden insbesondere der Abstand des Wegsensors zur Drehachse, die Ausrichtung und Genauigkeit des Wegsensors in seiner Messposition, die Verbiegung des Achsschenkels unter dem Krafteinfluss der Lastgebevorrichtung und andere Winkel sowie Wegdaten sowie deren Genauigkeit berücksichtigt.

Eine bevorzugte Ausgestaltung des erfindungsgemäßen Verfahrens sieht vor, dass der erste Roboterachsschenkel durch die wechselseitige Kraft parallel zur Drehachse das Achsgelenk beaufschlagt und das Spiel als Lagerspiel berechnet wird.

In diesem Fall ist es vorteilhaft, dass die Kraft ausschließlich in der Richtung angreift, in der das Lagerspiel für das Achsgelenk überhaupt vorhanden ist. Die vom Wegsensor wahrgenommene Auslenkung des ersten Roboterachsschenkels entspricht dann im Wesentlichen dem tatsächlich vorhandenen Lagerspiel.

In einem anderen Fall ist der Anmeldungsgegenstand dadurch gekennzeichnet, dass der erste Roboterachsschenkel durch die wechselseitige Kraft tangential zur, beziehungsweise in der Drehrichtunge der Drehachse des Achsgelenkes beaufschlagt und als Spiel das Getriebespiel des Achsgelenkes berechnet wird.

Hier hat die beaufschlagende Kraft keinen Axialanteil, sondern nur einen Tangentialanteil mit Bezug zu Drehachse, wobei im Ergebnis die vom Wegsensor wahrgenommene Auslenkung im Wesentlichen dem Getriebespiel entspricht.

Bekannte Fehlerquellen, wie beispielsweise die Verbiegung des Roboterachsschenkels unter der Krafteinwirkung der Lastgebevorrichtung, werden bei der Berechnung des Getriebespiels entsprechend berücksichtigt.

Des weiteren wird die Aufgabe gelöst durch eine Messanordnung zur Spielmessung an einem Achsgelenk eines Industrieroboters der Eingangs genannten Art, der dadurch gekennzeichnet ist, dass durch eine Lastgebvorrichtung ein erster Roboterachsschenkel in einer Messlinie wechselseitig mit einer vorgebbaren Kraft beaufschlagbar ist, dass die vorgegebene Kraft für einen bestimmten Zeitraum aufrecht erhalten werden kann, dass die durch die Kraftbeaufschlagung bewirkte Auslenkung des ersten Roboterachsschenkels eine Richtung einer Messlinie vorgibt, dass ein Wegesensor so positioniert ist, dass er in Richtung der Messlinie misst, dass der Wegsensor in einem vorgegebenen Abstand zur Drehachse des Achsgelenks angeordnet ist.

Durch die entsprechende Anordnung einer Lastgebevorrichtung ist der erste Roboterachsschenkel im Prinzip ohne Einschränkung beliebig oft belastbar. Auf diese Weise ist eine entsprechend hohe Zahl von Messungen ermöglicht und das Messergebnis als solches entsprechend genau. Zudem ist es durch die Lastgebevorrichtung ermöglicht, die Kraftbeaufschlagung vergleichsweise schnell durchzuführen, so dass die Spielmessung und deren Auswertung entsprechend schnell erfolgt.

Eine erfindungsgemäße Fortbildung des Anmeldungsgegenstandes ist dadurch gekennzeichnet, dass mit dem Wegsensor die gemessene Auslenkung anzeigbar ist.

In einem einfachen Fall sind somit die maximalen Auslenkungen in beiden Richtungen der Messlinie mit Hilfe mechanischer (Zeiger u.ä.) oder elektronischer Mittel (Bildschirm u.ä.) direkt am Wegsensor anzeigbar.

In einer weiteren Ausgestaltung ist die Messanordnung derart aufgebaut, dass der Wegsensor mit einem Auswertegerät verbunden ist. Fallweise ist zwischen dem Wegsensor und dem Auswertegerät ein Messwandler zwischenschaltbar, insbesondere dann, wenn die gemessene Daten gefiltert, selektiert oder in einer anderen Form aufbereitet werden müssen, beispielsweise wenn der Wegsensor ein analoges Signal liefert und das Auswertegerät digitale Daten(pakete) benötigt.

In einer weiteren vorteilhaften Ausgestaltung der anmeldungsgemäßen Messanordnung ist der Wegsensor mittels einer Haltevorrichtung mit einem zweiten, während der Messung unbewegten, Roboterachsschenkel verbunden.

Hier besteht der Vorteil darin, dass dieser zweite Roboterachsschenkel mit dem Roboterfuß verbunden ist, so dass mögliche Positionsfehler, die aufgrund der Bewegung des Roboterarmes und der einzelnen Schenkel des Roboterarmes entstehen, ohne Einfluss auf den Messwert des Wegsensors für den ersten Roboterachsschenkel sind. Der Wegsensor nimmt in dieser Anordnung insbesondere mögliche Auslenkungsfehler des ersten Roboterachsschenkels in seiner Messung auf, während weitere mögliche Auslenkungen des zweiten Roboterachsschenkels beziehungsweise alle anderen Achsschenkel, die zwischen dem Achsgelenk und dem Roboterfuß angeordnet sind, zwar die Position des Sensors im Raum, also die absolute Position des Sensors gegebenenfalls verändern, jedoch die relative Position, also die Position bezüglich des ersten Roboterachsschenkels, im wesentlichen unbeeinflusst lassen.

Weitere vorteilhafte Ausgestaltung des Erfindungsgegenstandes sind den weiteren abhängigen Ansprüchen zu entnehmen.

Anhand den in den Zeichnungen angegebenen Ausführungsbeispielen sollen die Erfindung, ihre Vorteile sowie weitere Verbesserungen der Erfindung näher erläutert und beschrieben werden.

Es zeigen:

Fig. 1 Eine erste erfindungsgemäße Messanordnung zur Getriebespielmessung,

Fig. 2 eine zweite erfindungsgemäße Messanordnung zur Lagerspielmessung,

Fig. 3 eine Skizze des Messprinzip einer Messanordnung,

Fig. 4 ein Beispiel einer Messwertanzeige bei einer Spielmessung und

Fig. 5 ein Beispiel einer bewerteten Achsspielmessung.

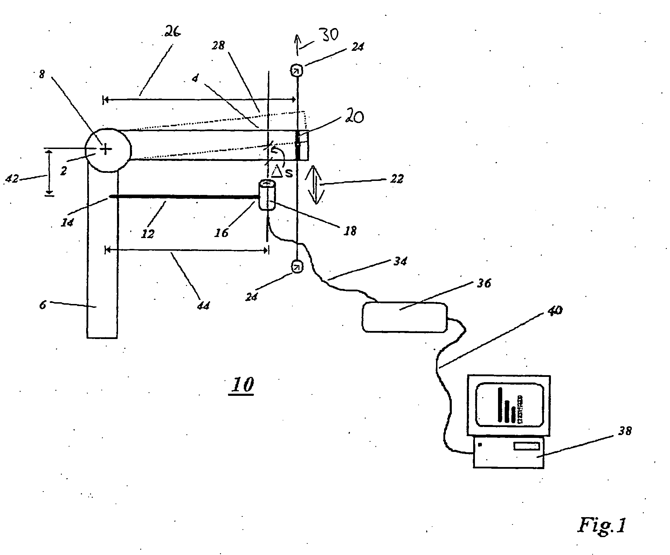

Fig.1 zeigt als Beispiel einer ersten Messanordnung 10 zur Getriebespielmessung an einem mehrachsigen Roboter. Hierzu ist schematisch ein Achsgelenk 2 gezeigt, welches einen ersten 4 und einen zweiten Roboterachsschenkel 6 drehbeweglich um eine Drehachse 8 verbindet. Dabei soll im gewählten Beispiel der erste Roboterachsschenkel 4 mit dem freien Ende eines Roboterarmes verbunden sein, während der zweite Roboterachsschenkel 6 mittels weiterer Achsgelenke und weitere Roboterachsschenkel, die jedoch hier nicht dargestellt sind, mit einem Roboterfuß verbunden ist, der wiederum mit einem Fundament verbunden ist.

Ein Haltestab 12 ist mit seinem ersten Ende 14 am zweiten Roboterachsschenkel 6 fest verbunden. Die Verbindungsstelle ist von der Drehachse 8 mit einem ersten Abstand angebracht. An einem zweiten Ende 16 ist ein Wegsensor 18 angeordnet und so ausgerichtet, dass die Wegmessung genau in der Bildebene gemäß dieser Figur verläuft und zudem, wie in diesem Bild dargestellt, genau senkrecht zur Längserstreckung des ersten Roboterachsschenkel 4 in seiner Ausgangstellung für die Spielmessung. Im gewählten Beispiel bilden der erste 4 und zweite Roboterachsschenkel 6 einen rechten Winkel zueinander. In dieser Anordnung verläuft der Haltestab 12 genau parallel zur unbelasteten Ausgangslage des ersten Roboterachsschenkels 4.

Im Nahbereich des freien Endes des ersten Roboterachsschenkels 4 ist einen Verbindungsvorrichtung 20 angebracht. An der Verbindungsvorrichtung 20 greift eine in dieser Figur nicht dargestellte Lastgebevorrichtung an und bringt abwechselnd eine zuvor definierte Kraft als Last in der in der Figur mit den ersten Pfeilen 22 angebende Richtung ein. Die Lastgebevorrichtung selbst ist in diese Figur nicht gezeigt, jedoch sollen symbolisch die Auswirkungen, also die aufgebrachte Kraft auf den ersten Roboterachsschenkel 4 durch die Verbindungslinien zwischen der Verbindungsvorrichtung 20 und zwei entsprechend angeordneten Kraftmessinstrumenten 24, angedeutet sein. Im gewählten Beispiel wird die Kraft durch Zugkräfte, beispielsweise angreifende Seile, auf den ersten Roboterachsschenkel 4 aufgebracht. Es ist jedoch auch ohne weiteres denkbar, dass durch entsprechende pneumatische oder hydraulische oder elektrohydraulische oder nur elektrische Antriebe auch als Druckkräfte oder eine Mischung aus Druck- und Zugkräften in einen Roboterachsschenkel eingebracht werden.

Durch die gewählte Art der Darstellung, ist besonders leicht erkennbar, dass die Entfernung des Einbringungspunktes der Kraft zur Drehachse 8, hier als erster Abstand 26 bezeichnet, aufgrund der erzeugten Hebelwirkung, beziehungsweise des eingebrachten Moments auf das Achsgelenks 2, in Abhängigkeit der aufgebrachten Kraft gewählt werden muss. Die aufzubringende Kraft ist bevorzugt so gewählt, dass einerseits ein Getriebe des Achsgelenks 2, je nach Kraftrichtung, jeweils in seinen Endlagen entsprechend des vorhanden Spiels gebracht wird, andererseits eine die Messung verfälschende Verformung des ersten Roboterachsschenkels 4 vermieden wird. Der erste Roboterachsschenkel 4 wird unter Krafteinwirkung immer etwas gebogen. Dies kann aber bei der Behandlung und Korrektur der Messwerte des Wegsensors 18 berücksichtigt werden.

Um dies anzudeuten, wurde eine Auslenkposition 28 als punktierter Umriss des ersten Roboterachsschenkels 2 in einer maximalen Auslenkposition dargestellt, in dem Fall, dass die vorgegebene maximale Kraft durch die Lastgebevorrichtung gerade in der mit dem zweiten Pfeil 30 angedeuteten Richtung aufgebracht wird.

Der Wegsensor 18 ist mittels einer ersten Messleitung 34 mit einem Messwandler 36 verbunden. In dem dargestellten Beispiel hat der Messwandler 36 mehrere Funktionen. Der Wegsensor 18 liefert ein analoges Signal, so dass der Messwandler 36 unter anderem die Aufgabe hat, das analoge Signal in ein digitales Signal zu verwandeln und an seinem Ausgang zum Beispiel für ein Auswertegerät zur Verfügung zu stellen. In diesem Beispiel ist das Ausgabegerät ein Messcomputer 38, der mittels einer zweiten Messleitung 40 an den Ausgang des Messwandlers 36 angeschlossen ist. Die zweite Messleitung 40 kann aber bereits eine Datenverbindungsleitung sein, beispielsweise in dem Fall, dass der Messwandler 36 ebenfalls ein Messcomputer ist und die Ausgangsdaten bereits auf ein vorgeschriebenes oder sonstiges definiertes Datenprotokoll aufbereitet sind. Das hat den besonderen Vorteil, dass der Messwandler 36 universell einsetzbar ist und so verschiedene Bussysteme oder auch verschiedene Wegsensoren an den Messwandler 36 anschließbar sind, ohne dass dieses Gerät baulich verändert werden müsste. Auf der anderen Seite ist mit einem derartigen Messwandler 36 ein sehr flexibler Aufbau der Messanordnung ermöglicht. Neben dem dargestellten Messcomputer 38 ist beispielsweise das Einspeisen des Ausgangssignals des Messwandlers 36 in ein Leitsystem oder in ein Messsystem möglich, so dass die Daten auch zu weiter entfernten Linienstellen, zum Beispiel in eine Messwarte oder per Datenleitung oder entsprechender Ankopplung über Telekomleitungen und Internet zu prinzipiell jedem Standpunkt weltweit übermittelbar sind.

Ausgehend von der vorstehenden erfindungemäßen Messanordnung zur Getriebespielmessung an einem Achsgelenk eines Roboters soll das erfindungsgemäße Verfahren näher erläutert werden.

Die Lastgebevorrichtung beaufschlagt den ersten Roboterachsschenkel 4 zunächst mit einer Kraft in eine der Richtungen, wie mit dem ersten Pfeil 22 angegeben. Aufgrund der Krafteinwirkung wird der erste Roboterachsschenkel 4 nun aus seiner lastfreien Position ausgelenkt und in Richtung der Kraft leicht verschoben. Mittels desjenigen Kraftmessers 24, der auf Seite der angreifenden Kraft angeordnet ist, wird die Kraft ständig gemessen. Die Lastgebevorrichtung beschränkt den Maximalbetrag der Kraft, in dem der Messwert des Kraftmessers an die Lastgebevorrichtung übertragen wird und diese die aktuell herrschende Belastung des ersten Roboterachsschenkels 4 steuert. Der Vorgang der Auslenkung wird von dem Wegsensor 18 streckenmäßig erfasst. Im gewählten Beispiel ist der Wegsensor ein Ultraschallsensor, der auch kleine Streckendifferenzen mit ausreichender Genauigkeit erfasst. Der Wegsensor 18 ist durch den Haltestab 12 starr mit dem zweiten Roboterachsschenkel 6 verbunden. Das erste Ende 14 ist von der Drehachse 8 mit einem ersten Abstand 42 beabstandet. Ebenso ist ein zweiter Abstand 44 durch die Länge des Haltestabs 12 vorgegeben, so dass die Position des Wegsensors 18 exakt bestimmbar ist, beispielsweise, um den Wegsensor 18 in einem optimalen Abstand zum ersten Roboterachsschenkel 4 zu positionieren.

Die Lastgebevorrichtung erhält die vorgegebene Kraft auf den ersten Roboterachsschenkel 4 nun einen Moment lang aufrecht, während die Messung einer Auslenkung Δs ständig vorgenommen wird. Nach einer gewissen Zeit wird der erste Roboterachsschenkel 4 wieder entlastet und die Lasthebevorrichtung bringt nun eine Kraft in genau entgegengesetzter Richtung wie zuvor auf den ersten Roboterachsschenkel 4 auf. Die Auslenkung erfolgt somit nun in der genau entgegen gesetzten Richtung. Auch dieser Vorgang wird vom Wegsensor 18 erfasst. Wie schon zuvor wird auch hier die tatsächlich aufgebrachte Kraft durch eine weitere Kraftmessvorrichtung 24 erfasst und auf ein vorgegebenes Maximum beschränkt.

Die vom Wegsensor 18 erfassten Daten werden an den Messwandler 36 weitergegeben, der die empfangenen analogen Signale vom Wegsensor 18 in digitale, vom Messcomputer 38 verwertbare, Signale umwandelt.

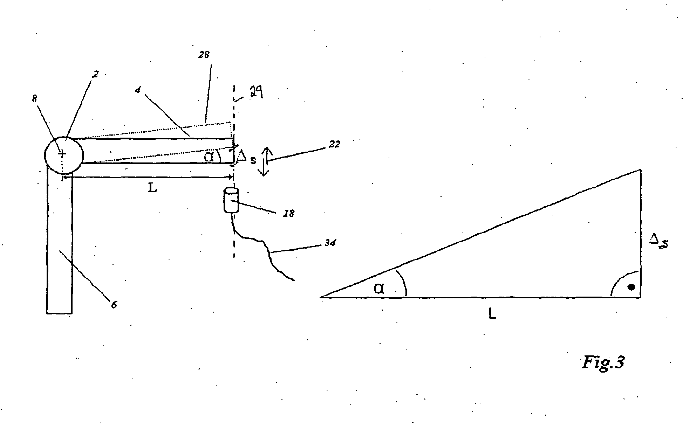

Der Messcomputer 38 berechnet aufgrund der geometrischen Anordnungsdaten und der Messwerte des Wegsensors 18, also die gemessene Auslenkung Δs in beide gemessene Richtungen, in der der erste Roboterachsschenkel 4 belastet wurde, ein tatsächlich vorhandenes Spiel am Achsgelenk 2. Aufgrund der in diesem Beispiel gewählten Belastungsrichtung ist das berechnete Spiel das Getriebespiel, also dasjenige Spiel, das in der Drehrichtung des Achsgelenks 2 messbar ist. Die Berücksichtigung der geometrischen Anordnungsdaten werden in der Figur 3 näher erläutert. Von Vorteil ist jedoch bei dieser Anordnung, dass der Wegsensor 18 genau auf eine Messlinie ausgerichtet wird, die der erwarteten Auslenkungsrichtungen des Roboterachsschenkels entspricht und aufgrund der Wahl der Kraftangriffsrichtungen genau parallel zu diesen sowie tangential zu den Drehrichtungen der Drehachse 8 des Achsgelenks 2 ausgerichtet sind. Um unnötige mögliche Fehlerquellen auszuschließen, greift auch die Lastgebevorrichtung bei ihrer wechselseitigen Beaufschlagung des ersten Roboterachsschenkels 4 jeweils ebenfalls in den beiden Richtungen der Messlinie an. Mögliche Fehler in der Ausrichtung des Wegsensors 18, beispielsweise ein Winkelfehler bei der Ausrichtung des Wegsensors 18 bezüglich der Messlinie und der Richtung der Auslenkung des ersten Roboterachsschenkels 4, können ebenfalls vom Auswertegerät mittels der entsprechend vorgenommenen Messung der geometrischen Anordnungsdaten des Wegsensors 18 ausgeglichen werden.

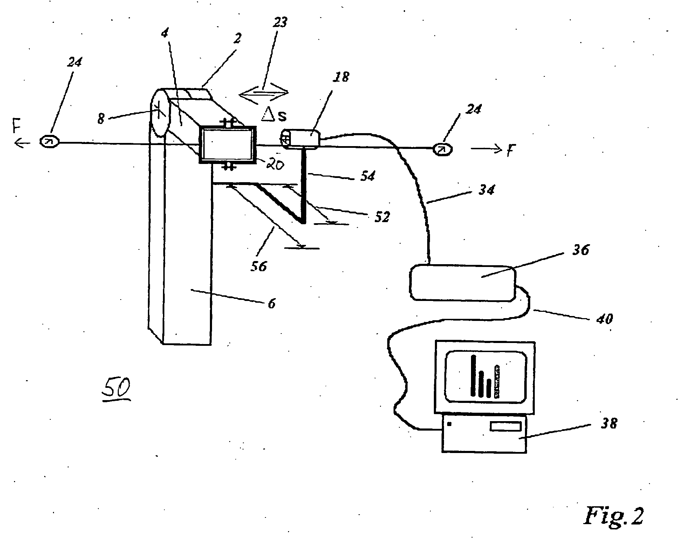

Fig. 2 zeigt eine zweite Messanordnung 50, die ähnlich aufgebaut ist, wie die erste Messanordnung 10, weshalb auch für gleichartige Bauteile dieselben Bezugszeichen wie in Fig. 1 verwendet werden.

Im Unterschied zur Fig. 1 zeigt Fig. 2 jedoch eine Spielmessung des Lagerspiels am Achsgelenk 2, das heißt, dass die Messrichtungen entlang der Messlinie des Wegsensors 18 genau parallel zur Drehachse 8 des Achsgelenks 2 verläuft, und zwar genau in einem dritten Abstand 52, wobei dieser dem lichten Abstand zwischen dem Wegsensor 18 und der Drehachse 8 entspricht.

Der Wegsensor 18 in dieser Figur wird durch einen zweiten Haltestab 54 in Position gehalten, dessen eines Ende wiederum am zweiten Roboterachsschenkel 6 angebracht ist und dessen zweites Ende mit dem Sensor 18 verbunden ist, wobei im Unterschied zur Figur 1 der zweite Haltestab 54 durch zwei räumliche Richtungsänderungen die gewünschte Positionierung des Wegsensors 18 in allen drei Raumrichtungen ermöglicht. Dabei kann durch ein erstes Teilstück des zweiten Haltestabs 54, welches mit dem zweiten Roboterachsschenkel 6 verbunden ist, der Abstand des Wegsensors 18 zum ersten Roboterachsschenkel 4, nämlich in Richtung der Drehachse 8, eingestellt werden. Mittels eines zweiten Teilstückes, welches als Länge den dritten Abstand 52 aufweist, wird der lichte Abstand zwischen dem Wegsensor 18 und der Drehachse 8 eingestellt. Schließlich ist mit einem dritten Teilstück des zweiten Haltestabs 54, welches an seinem freien Ende den Wegsensor 18 trägt, die noch verbleibende dritte Raumrichtung einstellbar, so dass der Wegsensor 18 mit einem bestimmten Abstand zum ersten Roboterachsschenkel 4 entlang dessen Auslenkung, diesmal jedoch paralleler Richtung zur Drehachse 8 des Achsgelenks 2, ausgerichtet ist.

Dementsprechend greift die Lastgebevorrichtung, wiederum in dieser Figur nicht dargestellt, entlang einer parallelen Linie zur Drehachse 8 an dem ersten Roboterachsgelenk 4 an, wobei sich das durch die Lastgebevorrichtung aufgebrachte Moment in jeder Richtung, in der belastet wird, neben der aufgebrachten maximalen Kraft F noch durch den vierten Abstand 56 bestimmt, dessen Größe durch den lichten Abstand zwischen der Verbindungsvorrichtung 20 und der Drehachse 8 bestimmt ist.

Der Angriffspunkt der Lastgebevorrichtung für das Einbringen der wechselseitig aufgebrachten Kraft, die Verbindungsvorrichtung ist hier ausgeführt als Schelle, die den ersten Roboterachsschenkel 4 kraftschlüssig umschließt und über welche die Lastgebevorrichtung Kräfte zur Hin- und Herbewegung des ersten Roboterachsschenkels 4, gezeigt durch die zweiten Pfeile 23, in diesen einleitet.

Figur 3 nimmt Bezug zu Figur 1 und stellt die entsprechende Situation für eine Getriebespielmessung am Achsgelenk 2 in der linken Bildhälfte dar. Daher sind für die entsprechenden Bauteile auch dieselben Bezugszeichen wie in Fig. 1 verwendet worden. Gezeigt ist wieder der erste Roboterachsschenkel 4 in seiner, in diesem Bild horizontalen, unbelasteten Ausgangsstellung sowie in der oberen Auslenkposition 28.

Dabei ist der Wegsensor 18 in einer Distanz L von der Drehachse 8 entfernt. Der erste Roboterachsschenkel 4 wird zudem um einen Winkel α durch die Krafteinrichtung der Lastgebevorrichtung in die Auslenkposition 28 verbracht. Eine dabei zurückgelegte Anlenkstrecke ΔS, entlang einer Messlinie 29 des Wegsensors 18 gesehen, entspricht in etwa der vom ersten Roboterachsschenkel 4 tatsächlich zurückgelegten Strecke.

Ein kleiner Unterschied zwischen der tatsächlich zurückgelegten Wegstrecke des Roboterachsschenkels 4 und der eingezeichneten Auslenkstrecke ΔS besteht darin, dass der erste Roboterachsschenkel 4 durch die Drehung um die Drehachse 8 auf einen Kreisbogen gezwungen wird, was näherungsweise jedoch als rechtwinkliges Dreieck für eine Berechnung herangezogen wird. Dieses Dreieck als Berechnungsgrundlage ist in der rechten Bildhälfte nochmals als Skizze dargestellt. Dabei ist der Winkel α übertrieben dargestellt. Üblicherweise handelt es sich bei dem Winkel α um sehr kleine Winkel im Gradbereich. Demgemäss kann die Berechnung des Winkels α näherungsweise wie folgt dargestellt werden:

$$\alpha \text{ (in Grad)} = \arctan \Delta S/L$$

Diese Gleichung kann durch Einfügen von Korrekturfaktoren weiter verbessert werden.

Aus der Figur ist gut zu erkennen, dass der Wegsensor 18 lediglich die Auslenkstrecke ΔS messen muss, um zu einer Winkelangabe zu gelangen, die allein von geometrischen Anordnungsdaten abhängig ist. Wird zudem bei der Beaufschlagung mit einer Kraft durch die Lastgebevorrichtung beachtet, dass der erste Roboterachsschenkel 4 lediglich mit einer solchen Kraft beaufschlagt wird, dass gerade das Getriebespiel erkennbar ist, ohne dass die Verbiegung des Roboterachsschenkels 4 aufgrund der Krafteinwirkung eine nennenswerte Größe erreicht, die die Messung unbrauchbar könnte, liefert die Messanordnung eine sehr genaue Berechnungsgrundlage für die Berechnung des Spiels.

In dem weiteren Fall der Lagerspielmessung, wie in Fig. 2 dargestellt, ist eine vergleichbare Übertragung der vom Wegsensor 18 gemessenen Auslenkstrecke AS auf eine Winkelzahl nicht nötig. Ein mögliches Lagerspiel am Achsgelenk 2 drückt sich nämlich in einer Parallelverschiebung des gesamten zweiten Roboterachsschenkels 4 unter der Krafteinwirkung der Lastgebevorrichtung aus. Die mögliche Verbiegung des ersten Roboterachsschenkels 4 ist jedoch zu beachten.

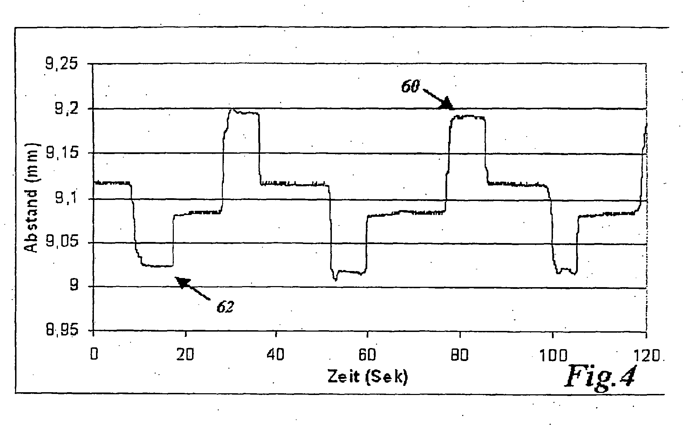

Fig. 4 zeigt die Abbildung einer realen Messung des Wegsensors 18, mit der die Auslenkung des ersten Roboterachsschenkels 4 am Achsgelenk 2 real gemessen wurde. Eine derartige Anzeige könnte beispielsweise auf einer Anzeigevorrichtung am Messcomputer 38 dargestellt werden. Dabei ist die Auslenkstrecke AS als zeitlicher Kurvenverlauf in einem Diagramm dargestellt, wobei die Abszissenachse die Zeit in Sekunden aufträgt, während die Ordinatenachse einen Abstand in mm angibt.

Die Kurve beginnt mit einem Messwert, bei dem der erste Roboterachsschenkel 4 unbelastet ist, wobei am Messverlauf ersichtlich ist, dass im folgenden die Lastgebevorrichtung eine Kraft aufwendet, die den ersten Roboterachsschenkel 4 in Richtung des Wegsensors 18 auslenkt, so dass der Abstand zwischen Wegsensor 18 und Roboterachsschenkel 4 verkleinert ist. Nach einer bestimmten Verharrungszeit bei einer vorgegebenen maximalen Last, hier als Tiefpunkt 62 der Kurve bezeichnet, folgt zunächst eine Entlastung des ersten Roboterachsschenkels 4, ohne Krafteinwirkung durch die Lastgebevorrichtung, um im Anschluss in die entgegengesetzte Richtung als zuvor von der Lastgebevorrichtung belastet zu werden. Dieser Vorgang wiederholt sich noch einmal, wobei die maximale Auslenkung bei einem Hochpunkt 60 gemessen wird.

An dieser Darstellung ist gut zu erkennen, dass anhand der Messung sowohl die Ausgangslage des ersten Roboterachsschenkel in einfacher Weise bestimmbar ist und zudem die Bestimmung der Hochpunkte 60 sowie der Tiefpunkte 62 leicht ermittelbar sind. Zudem bietet sich hier die Möglichkeit, über allgemein bekannte Methoden der Mittelwertbildung und Fehleranalyse die Berechnungsergebnisse weiter zu verbessern.

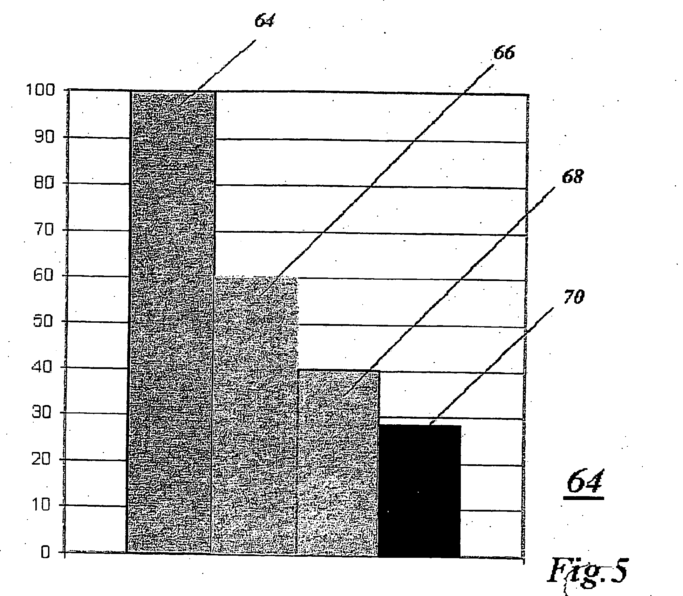

Fig. 5 zeigt das Beispiel einer bewerteten Achsspielmessung anhand einer Auswertegrafik 64. Bewertete Achsspielmessung heißt, dass direkte oder gefilterte, also in irgendeiner Form selektiert oder aufbereitete Messwerte zusätzlich mit einem besonderen Faktor gewichtet werden.

So auch in diesem Beispiel. Hierbei wurde auf der Koordinatenachse das Messspiel auf eine Prozentzahl zwischen 0 und 100% normiert, wobei ein 0%-Wert einem Spiel von 0 mm und die 100% einem Maximalspiel entsprechen, das im Prinzip willkürlich vorgegeben werden kann. So entspricht eine erste Säule 64, einem Maximalspiel bei 100%. Dabei kann zum Beispiel ein Wert festgelegt werden, bei dem erfahrungsgemäß eine Grenze erreicht worden ist, bei dem ein tatsächlich vorhandener Verschleiß den Betrieb des Roboters einschränkt oder gar stört. In der Figur ist dies durch eine zweite Säule 66, die eine Höhe von 60% aufweist, dargestellt. Ein tatsächlich gemessenes Achsspiel sowie dessen Bewertung wird durch eine dritte Säule 68 dargestellt, die in etwa bei 40% liegt. Zudem ist noch eine vierte Säule 70 gezeigt, die ein bereits vorhandenes erstes Spiel bei einem neuen Roboter darstellt.

Die Bewertung einer Achsspielmessung hat besondere Vorteile. Zum einen hat ein tatsächlich gemessener absoluter Verschleißwert den Nachteil, dass der absolute Wert allein wenig Aussagekraft hat, denn zur Aussage, ob der gemessene Wert innerhalb von erlaubten Grenzen ist, müssen auch die Minimum- und Maximumwerte für den Verschleißbereich bekannt sein. Diese wiederum sind individuell von der jeweiligen Achse am Roboter sowie von der Bauart und der Belastung und so weiter abhängig. Auf diese Weise müsste das Bedienpersonal eine Vielzahl von Werten kennen, um sich anhand der absoluten Messwerte ein umfassendes Bild über den Verschleißzustand des Roboters mit einer Vielzahl unterschiedlicher Achsen zu erarbeiten.

Zudem ist es möglich, bei einer bewerteten Betrachtung einer Spielmessung in den Bewertungsfaktor empirische Erkenntnisse, die insbesondere dem Servicepersonal des Roboterherstellers vorliegen, einfließen zu lassen, um so weitere Randbedingungen des Einsatzes des Roboters, beispielsweise die Art der Aufgabe, die der Roboter zu bearbeiten hat, oder den programmierten Bewegungsablauf den der Roboter bei seiner Arbeit zurücklegt, zu berücksichtigen. Auf diese Weise nimmt der Bewertungsfaktor nochmals Einfluss auf das Ergebnis, ob die betreffende absolute Spielmessung bereits einen unzulässigen Verschleiß darstellt oder noch toleriert werden kann. Ein weiterer Vorteil besteht darin, dass die Verschleißgrenzen, also die minimalen und maximalen Werte innerhalb derer sich ein gemessener Verschleiß idealer Weise befindet, bei einer prozentualen Angabe der bewerteten Spielmessung, immer auf die gleiche %-Grenze festlegen lässt und so einer benutzerfreundlichen Bedienung entgegenkommt.

Bezugszeichenliste

| 2 | Achsgelenk |
|---|---|
| 4 | erster Roboterachsschenkel |
| 6 | zweiter Roboterachsschenkel |
| 8 | Drehachse |
| 10 | erste Messanordnung |
| 12 | erster Haltestab |
| 14 | erstes Ende |
| 16 | zweites Ende |
| 18 | Wegsensor |
| 20 | Verbindungsvorrichtung |
| 22 | erste Pfeile |
| 23 | zweite Pfeile |
| 24 | Kraftmessinstrumente |
| 26 | erster Abstand |
| 28 | Auslenkposition |
| 29 | Messlinie |
| 34 | erste Messleitung |
| 36 | Messwandler |
| 38 | Messcomputer |
| 40 | zweite Messleitung |
| 42 | erster Abstand |
| 44 | zweiter Abstand |
| 50 | zweite Messanordnung |
| 52 | dritter Abstand |
| 54 | zweiter Haltestab |
| 56 | vierter Abstand |
| 60 | Hochpunkt |
| 62 | Tiefpunkt |
| 64 | Auswertegrafik |
| 66 | zweite Säule |
| 68 | dritte Säule |
| 70 | vierte Säule |
| 70 ΔS | Auslenkstrecke |

**Patentansprüche**

1. Verfahren zur Spielmessung an einem Achsgelenk (2) eines Industrieroboters, bei dem ein erster und ein zweiter Roboterachsschenkel (6) durch das Achsgelenk (2) in einer Drehrichtung beweglich miteinander verbunden sind, **dadurch gekennzeichnet, dass** eine Lastgebevorrichtung den ersten mit dem freien Ende (14) eines Roboterarmes verbundenen Roboterachsschenkel (4) in einer Messlinie (29) wechselseitig einmal in einer Richtung und einmal in entgegengesetzter Richtung mit einer vorgebbaren Kraft beaufschlagt, dass die vorgegebene Kraft für einen bestimmten Zeitraum aufrecht erhalten wird, bevor eine Entlastung des Roboterachsschenkels erfolgt, dass ein Wegsensor (18) die Auslenkung des ersten Roboterachsschenkels (4) in einem vorgebbaren Abstand (26; 42, 44, 52, 56) zur Drehachse (8) des Achsgelenks (2) misst, und dass ein mit dem Wegsensor (18) verbundenes Auswertegerät unter Berücksichtigung der geometrischen Anordnung bei der Messung des Wegsensors (18) und des Industrieroboters sowie der gemessenen Auslenkung einen Verdrehwinkel des ersten Roboterachsschenkels (4) als Maß eines vorhandenen Spieles am Achsgelenk (2) berechnet.

2. Verfahren nach Anspruch 1, **dadurch gekennzeichnet, dass** der erste Roboterachsschenkel (4) durch die wechselseitige Kraft parallel zur Drehachse (8) des Achsgelenkes (2) beaufschlagt und als Spiel das Lagerspiel berechnet wird.

3. Verfahren nach Anspruch 1 oder 2, **dadurch gekennzeichnet, dass** der erste Roboterachsschenkel (4) durch die wechselseitige Kraft tangential zu den beziehungsweise in den Drehrichtungen der Drehachse (8) des Achsgelenkes (2) beaufschlagt und als Spiel das Getriebespiel des Achsgelenkes (2) berechnet wird.

4. Verfahren nach einem der vorgenannten Ansprüche, **dadurch gekennzeichnet, dass** der Verdrehwinkel mit einem empirisch ermittelten Verschleißfaktor oder einer empirisch ermittelten Verschleißfunktion multipliziert wird.

5. Verfahren nach einem der vorgenannten Ansprüche, **dadurch gekennzeichnet, dass** die Messdaten des Wegsensors (18) mittels eines Messwandlers (36) diskretisiert werden.

6. Verfahren nach einem der vorgenannten Ansprüche, **dadurch gekennzeichnet, dass** die Messdaten des Wegsensors (18) gefiltert und / oder selektiert werden.

7. Verfahren nach einem der vorgenannten Ansprüche, **dadurch gekennzeichnet, dass** die gemessenen oder aufbereiteten Messdaten mit Verschleißgrenzwerten verglichen werden.

8. Verfahren nach einem der vorgenannten Ansprüche, **dadurch gekennzeichnet, dass** die gemessenen oder aufbereiteten Messdaten und / oder die Verschleißgrenzwerte und / oder das Ergebnis des Vergleiches auf einer Anzeigevorrichtung angezeigt werden.

9. Verfahren nach einem der vorgenannten Ansprüche, **dadurch gekennzeichnet, dass** die Messdaten gespeichert und oder in andere Datensysteme transferiert werden.

10. Verfahren nach einem der vorgenannten Ansprüche, **dadurch gekennzeichnet, dass** das Achsgelenk (2) durch den zweiten Roboterachsschenkel (6) zusammen mit einem Gelenkmotor für die Getriebespielmessung oder zusammen mit einem Gelenklager für die Lagerspielmessung in Position gehalten wird.

11. Verfahren nach einem der vorangegangen Ansprüche, **dadurch gekennzeichnet, dass** die Lastgebevorrichtung den ersten mit dem freien Ende eines Roboterarms verbundenen Roboterachsschenkel in einer Messlinie wechselseitig mehrfach jeweils einmal in einer Richtung und einmal in entgegengesetzter Richtung mit einer vorgebbaren Kraft oder Kraftfunktion beaufschlagt.

12. System mit Messvorrichtung und Industrieroboter (10, 50) zur Spielmessung an einem Achsgelenk (2) des Industrieroboters, wobei ein erster und ein zweiter Roboterachsschenkel (6) durch das Achsgelenk (2) in einer Drehrichtung beweglich miteinander verbunden sind, **dadurch gekennzeichnet, dass** durch eine Lastgebevorrichtung ein erster Roboterachsschenkel (4) in einer Messlinie (29) wechselseitig mit einer vorgebbaren Kraft beaufschlagbar ist, dass die vorgegebene Kraft für einen bestimmten Zeitraum aufrecht erhalten werden kann, dass die durch die Kraftbeaufschlagung bewirkte Auslenkung des ersten Roboterachsschenkels eine Richtung einer Messlinie vorgibt, dass ein Wegesensor so positioniert ist, dass er in Richtung der Messlinie misst, dass der Wegsensor (18) in einem vorgegebenen Abstand (26; 42, 44, 52, 56) zur Drehachse (8) des Achsgelenks (2) angeordnet ist.

13. System mit Messvorrichtung und Industrieroboter (10, 50) nach Anspruch 12, **dadurch gekennzeichnet, dass** mit dem Wegsensor (18) die gemessene Auslenkung anzeigbar ist.

14. System mit Messvorrichtung und Industrieroboter (10, 50) nach Anspruch 12 oder 13, **dadurch gekennzeichnet, dass** der Wegsensor (18) mit einem Auswertegerät verbunden ist.

15. System mit Messvorrichtung und Industrieroboter (10, 50) nach einem der Ansprüche 12 bis 13, **dadurch gekennzeichnet, dass** dem Wegsensor (18) und dem Auswertegerät ein Messwandler (36) zwischengeschaltet ist.

16. System mit Messvorrichtung und Industrieroboter (10, 50) nach einem der Ansprüche 12 bis 15, **dadurch gekennzeichnet, dass** das Auswertegerät ein Messcomputer (38) ist und gegebenenfalls eine Anzeigevorrichtung, insbesondere einen Bildschirm, aufweist.

17. System mit Messvorrichtung und Industrieroboter (10, 50) nach einem der Ansprüche 12 bis 16, **dadurch gekennzeichnet, dass** der Wegsensor (18) mittels einer Haltevorrichtung, insbesondere eines Haltestabes (12, 54) oder einer Haltestange, mit einem zweiten Roboterachsschenkel (6) verbunden ist, dessen Position bezüglich des ersten Roboterachsschenkels (4) während der Messung von möglishen Auslenkungen des zweiten Roboterachsschenkels (b) im wesentlichen unbeeinflusst gelassen wird.

18. System mit Messvorrichtung und Industrieroboter (10, 50) nach einem der Ansprüche 12 bis 17, **dadurch gekennzeichnet, dass** im Auswertegerät oder / und im Messwandler (36) Computerprogrammprodukte implementiert sind, durch welche die Messung und / oder die Auswertung der Messdaten kontrollierbar ist.

**Claims**

1. A method for measuring the play in an axle joint (2) of an industrial robot, in which a first and second axle journal (6) of the robot are movably connected with each other in one direction of rotation by the axle joint (2), **characterized in that** a load-giving apparatus pressurizes with a predeterminable force the first robot axle journal (4) connected with the free end (14) of a robot arm in one strobe line (29) in an alternating manner one in one direction and one in the opposite direction, that the predetermined force is maintained for a certain period before there is a relief of the robot axle journal, that a path sensor (18) measures the deflection of the first robot axle journal (4) at a predetermined distance (26; 42, 44, 52, 56) to the rotation axis (8) of the axle joint (2), and that an evaluation device connected with the path sensor (18), by taking into account the geometrical arrangement in the measurement of the path sensor (19) and the industrial robot and the measured deflection, calculates a twist angle of the first robot axle journal (4) as a measure of an existing play in the axle joint (2).

2. A method according to claim 1, **characterized in that** the first robot axle journal (4) is pressurized by the alternating force parallel to the rotational axis (8) of the axle joint (2) and the play of the bearing is calculated as the play.

3. A method according to claim 1 or 2, **characterized in that** the first robot axle journal (4) is pressurized by the alternating force tangentially to or in the directions of rotation of the rotation axis (8) of the axle joint (2) and the transmission play of the axle joint (2) is calculated as the play.

4. A method according to one of the preceding claims, **characterized in that** the twist angle is multiplied with an empirically determined wear factor or an empirically determined wear function.

5. A method according to one of the preceding claims, **characterized in that** the measured data of the path sensor (18) are discretized by means of a transducer.

6. A method according to one of the preceding claims, **characterized in that** the measured data of the path sensor (18) are filtered and/or selected.

7. A method according to one of the preceding claims, **characterized in that** the measured or prepared measured data are compared with limit wear values.

8. A method according to one of the preceding claims, **characterized in that** the measured or prepared measured data and/or the limit wear data and/or the result of the comparison are displayed on a display apparatus.

9. A method according to one of the preceding claims, **characterized in that** the measured data are stored and/or transferred to other data systems.

10. A method according to one of the preceding claims, **characterized in that** the axle joint (2) is held in position by the second robot axle journal (6) together with a joint motor for the transmission play measurement or together with a joint bearing for the bearing play measurement.

11. A method according to one of the preceding claims, **characterized in that** the load-giving apparatus pressurizes with a predeterminable force or force function the first robot axle journal connected with the free end of a robot arm in one strobe line in an alternating manner several times each once in one direction and once in the opposite direction.

12. A system with a measuring apparatus and industrial robot (10, 50) for measuring the play in an axle joint (2) of the industrial robot, with a first and second robot axle journal (6) being movably connected with each other in one rotational direction, **characterized in that** through a load-giving apparatus a first robot axle journal (4) is pressurized in one strobe line (29) in an alternating manner with a predetermined force, that the predetermined force can be maintained for a certain period of time, that the deflection of the first robot axle journal caused by the application of force predetermines a direction of a strobe line, that a path sensor is positioned in such a way that it measures in the direction of the strobe line, that the path sensor (18) is arranged at a predetermined distance (26; 42, 44, 52, 56) to the rotation axis (8) of the axle joint (2).

13. A system with a measuring apparatus and industrial robot (10, 50) according to claim 12, **characterized in that** the measured deflection can be displayed with the path sensor (18).

14. A system with a measuring apparatus and industrial robot (10, 50) according to claim 12, **characterized in that** the path sensor (18) is connected with an evaluation device.

15. A system with a measuring apparatus and industrial robot (10, 50) according to one of the claims 12 to 13, **characterized in that** a transducer (36) is interposed between the path sensor (18) and the evaluation device.

16. A system with a measuring apparatus and industrial robot (10, 50) according to one of the claims 12 to 15, **characterized in that** the evaluation device is a measuring computer (38) and optionally comprises a display apparatus, especially a screen.

17. A system with a measuring apparatus and industrial robot (10, 50) according to one of the claims 12 to 16, **characterized in that** the path sensor (18) is connected by means of a holding apparatus, especially a holding bar (12, 54) or a holding rod, to a second robot axle journal 6) whose position with respect to the first robot axle journal (4) is substantially left during the measurement without any influences by possible deflections of the second robot axle journal (6).

**18.** A system with a measuring apparatus and industrial robot (10, 50) according to one of the claims 12 to 17, **characterized in that** computer program products are implemented in the evaluation device and/or in the transducer (36), by means of which the measurement and/or the evaluation of the measured data can be checked.

## Revendications

**1.** Procédé pour la mesure du jeu sur une articulation d'axe (2) d'un robot industriel, dans lequel un premier tourillon d'axe de robot (6) et un deuxième sont reliés entre eux de manière mobile dans un sens de rotation par l'articulation d'axe (2), **caractérisé en ce qu'**un dispositif de détection de la charge agit sur le premier tourillon d'axe de robot (4) relié à l'extrémité libre (14) d'un bras de robot sur une ligne de mesure (29) alternativement une fois dans un sens et une fois dans le sens opposé avec une force pouvant être prédéterminée, **en ce que** la force prédéterminée est maintenue pendant une certaine durée avant que le tourillon d'axe de robot soit déchargé, **en ce qu'**un capteur de déplacement (18) mesure la déviation du premier tourillon d'axe de robot (4) à une distance (26 ; 42, 44, 52, 56) pouvant être prédéterminée par rapport à l'axe de rotation (8) de l'articulation d'axe (2), et **en ce qu'**un appareil d'interprétation relié au capteur de déplacement (18) calcule, compte tenu de la disposition géométrique lors de la mesure du capteur de déplacement (18) et du robot industriel ainsi que de la déviation mesurée, un angle de torsion du premier tourillon d'axe de robot (4) qui indique un jeu existant au niveau de l'articulation d'axe (2).

**2.** Procédé selon la revendication 1, **caractérisé en ce que** le premier tourillon d'axe de robot (4) est soumis à la force alternée parallèlement à l'axe de rotation (8) de l'articulation d'axe (2) et le jeu calculé est le jeu dans le palier.

**3.** Procédé selon la revendication 1 ou 2, **caractérisé en ce que** le premier tourillon d'axe de robot (4) est soumis à la force alternée de façon tangente à ou dans les sens de rotation de l'axe de rotation (8) de l'articulation d'axe (2) et le jeu calculé est le jeu dans l'engrenage de l'articulation d'axe (2).

**4.** Procédé selon l'une des revendications précédentes, **caractérisé en ce que** l'angle de torsion est multiplié par un facteur d'usure déterminé empiriquement ou une fonction d'usure déterminée empiriquement.

**5.** Procédé selon l'une des revendications précédentes, **caractérisé en ce que** les données de mesure du capteur de déplacement (18) sont discrétisées au moyen d'un convertisseur de mesure (36).

**6.** Procédé selon l'une des revendications précédentes, **caractérisé en ce que** les données de mesure du capteur de déplacement (18) sont filtrées et/ou sélectionnées.

**7.** Procédé selon l'une des revendications précédentes, **caractérisé en ce que** les données de mesure mesurées ou traitées sont comparées à des valeurs limites d'usure.

**8.** Procédé selon l'une des revendications précédentes, **caractérisé en ce que** les données de mesure mesurées ou traitées et/ou les valeurs limites d'usure et/ou le résultat de la comparaison sont affichés sur un dispositif d'affichage.

**9.** Procédé selon l'une des revendications précédentes, **caractérisé en ce que** les données de mesure sont mémorisées et/ou transférées dans d'autres systèmes de données.

**10.** Procédé selon l'une des revendications précédentes, **caractérisé en ce que** l'articulation d'axe (2) est retenue en position par le deuxième tourillon d'axe de robot (6) avec un moteur d'articulation pour la mesure du jeu dans l'engrenage ou avec un palier d'articulation pour la mesure du jeu dans le palier.

**11.** Procédé selon l'une des revendications précédentes, **caractérisé en ce que** le dispositif de détection de la charge contraint plusieurs fois le premier tourillon d'axe de robot relié à l'extrémité libre d'un bras de robot dans une ligne de mesure une fois dans une direction et une fois dans la direction opposée avec une force ou une fonction de force pouvant être prédéterminée.

**12.** Système avec un dispositif de mesure et un robot industriel (10, 50) pour la mesure du jeu dans une articulation d'axe (2) du robot industriel, dans lequel un premier tourillon d'axe de robot (6) et un deuxième sont reliés l'un à l'autre de manière mobile dans un sens de rotation par l'articulation d'axe (2), **caractérisé en ce qu'**un dispositif de détection de la charge peut soumettre alternativement un premier tourillon d'axe de robot (4) dans une ligne de mesure (29) à une force pouvant être prédéterminée, **en ce que** la force prédéterminée peut être maintenue pendant une certaine durée, **en ce que** la déviation du premier tourillon d'axe de robot produite par l'application de la force détermine une direction d'une ligne de mesure, **en ce qu'**un capteur de déplacement est positionné de telle manière qu'il mesure dans la direction de la ligne de mesure, **en ce que** le capteur de déplacement (18) est disposé à une distance prédéterminée (26 ; 42, 44, 52, 56) par rapport à l'axe de rotation (8) de l'articulation d'axe (2).

**13.** Système avec un dispositif de mesure et un robot industriel (10, 50) selon la revendication 12, **caractérisé en ce que** le capteur de déplacement (18) permet d'afficher la déviation mesurée.

**14.** Système avec un dispositif de mesure et un robot industriel (10, 50) selon la revendication 12 ou 13, **caractérisé en ce que** le capteur de déplacement (18) est relié à un appareil d'interprétation.

**15.** Système avec un dispositif de mesure et un robot industriel (10, 50) selon l'une des revendications 12 à 13, **caractérisé en ce qu'**un convertisseur de mesure (36) est monté entre le capteur de déplacement (18) et l'appareil d'interprétation.

**16.** Système avec un dispositif de mesure et un robot industriel (10, 50) selon l'une des revendications 12 à 15, **caractérisé en ce que** l'appareil d'interprétation est un ordinateur de mesure (38) et possède le cas échéant un dispositif d'affichage, en particulier un écran.

**17.** Système avec un dispositif de mesure et un robot industriel (10, 50) selon l'une des revendications 12 à 16, **caractérisé en ce que** le capteur de déplacement (18) est relié au moyen d'un dispositif de maintien, en particulier d'une barre de maintien (12, 54) ou d'une tige de maintien, à un deuxième tourillon d'axe de robot (6) dont la position par rapport au premier tourillon d'axe de robot (4) n'est pour l'essentiel pas influencée pendant la mesure de déviations possibles du deuxième tourillon d'axe de robot (6).

**18.** Système avec un dispositif de mesure et un robot industriel (10, 50) selon l'une des revendications 12 à 17, **caractérisé en ce que** sont exécutés dans l'appareil d'interprétation et/ou dans le convertisseur de mesure (36) des programmes d'ordinateur par lesquels la mesure et/ou l'interprétation des données de mesure peuvent être contrôlées.

*Fig.1*

EP 1 607 714 B1

Fig.2

*Fig.3*

Fig.4

**Fig.5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19943481 A
- WO 03010490 A